# FASCICULE DE BREVET EUROPEEN

(11) **EP 1 289 274 B1**
(45) Date de publication et mention de la délivrance du brevet: **08.02.2017**
(21) Numéro de dépôt: 01402269.3
(22) Date de dépôt: 31.08.2001
(51) Int. Cl.: H04N 5/335, H04N 3/14

(54) **Procédé pour détecter le mouvement relatif entre une scène d'ou émane un rayonnement et une matrice de pixels susceptible de capter ce rayonnement**
Verfahren zur Feststellung der relativen Bewegung zwischen einer Strahlung abgebenden Szene und einer diese Strahlung empfangenden Pixelmatrix
Process for detecting the relative motion between a scene from which a radiation is released and a pixel matrix capting this radiation

(43) Date de publication de la demande: 05.03.2003
(73) Titulaire: CSEM Centre Suisse d'Electronique et de Microtechnique SA - Recherche et Développement, 2002 Neuchâtel (CH)
(72) Inventeur: Burgi, Pierre-Yves, 1205 Geneve (CH); Grenet, Eric, 2000 Neuchatel (CH); Ruedi, Pierre-François, 2068 Hauterive (CH)
(74) Mandataire: Gevers SA

(56) Documents cités:
- WO-A-99/09736
- CHUNG-YU WU ET AL: "A NEW STRUCTURE OF THE 2-D SILICON RETINA" IEEE JOURNAL OF SOLID-STATE CIRCUITS, IEEE INC. NEW YORK, US, vol. 30, no. 8, 1 août 1995 (1995-08-01), pages 890-897, XP000524387 ISSN: 0018-9200

## Description

La présente invention concerne le domaine du traitement des images et elle est relative, plus particulièrement à un procédé permettant la détection d'un mouvement d'un objet et/ou la mesure de la vitesse de cet objet par rapport à une matrice de pixels observant la scène dans laquelle se déplace cet objet, ladite matrice étant sensible au rayonnement, par exemple lumineux émanant de la scène observée.

Dans la demande de brevet européen n°O1 401 094.6 du 27 avril 2001 dont le contenu est incorporé par référence dans la présente description, on a décrit un procédé d'encodage temporel des informations vectorielles de contraste relevées par une matrice de photocapteurs sur une scène observée par celle-ci, procédé par lequel l'information relevée par chaque photocapteur est transformée en un signal sinusoïdal dont l'amplitude représente la magnitude du vecteur local de contraste et la phase l'angle de ce vecteur et par lequel également l'amplitude maximale détectée est comparée à un signal en forme de rampe décroissante, une impulsion étant engendrée lorsque ce signal en forme de rampe est égal à l'amplitude maximale. Le procédé consiste en outre à engendrer une seconde impulsion lorsque la fonction sinusoïdale passe par une valeur nulle après la génération de la première impulsion.

Les temps d'apparition des deux impulsions ainsi engendrées au niveau de chaque photocapteur (appelé ci-après pixel) constituent l'encodage temporel des informations relevées par la matrice de pixels.

La fonction sinusoïdale est le résultat de l'information relevée par un pixel donné combinée à celles relevées par les pixels voisins dans la matrice, modulées par une même fonction sinusoïdale par rapport au temps dont la phase constitue la pondération des pixels voisins dans la combinaison.

Ainsi, le procédé de la demande de brevet antérieure permet de déterminer pour chaque pixel de la matrice de pixels le contraste local de la scène observée.

Par un article de Chung-Wu et al. intitulé « A new structure of the 2-D silicon retina » (« Une structure nouvelle de la rétine en silicium et en 2D »), paru dans la revue IEEE Journal of Solid State Circuits, IEEE INC, New York, US, vol.30, n°8, 1 août 1995, pages 890-897, on connaît une rétine comprenant une matrice de pixels dans laquelle chaque pixel comprend deux éléments photosensibles qui fournissent chacun une information de luminance sous forme d'un courant. Les deux courants donnent naissance par soustraction à un signal présentant une transition brusque de part et d'autre d'une valeur zéro d'une valeur d'intensité normalisée, la transition apparaissant au moment du passage du pixel concerné de la matrice devant un bord avant ou arrière d'une image. Contrairement à ce qui est proposé dans la demande de brevet européen précitée, le signal de luminance capté par un pixel n'est donc pas passé à travers un filtre tournant qui en fait un signal vectoriel.

Par ailleurs, l'information de mouvement est obtenue à partir de la transition se produisant au moment où le pixel concerné passe devant le bord avant de l'image et celle se produisant au moment où ce pixel passe devant le bord arrière de celle-ci. La résolution de l'information que l'on peut obtenir avec cette matrice en ce qui concerne son mouvement relatif par rapport à l'image examinée, ne peut donc être que médiocre.

L'invention a pour but de proposer un procédé perfectionné par rapport à celui décrit dans la demande de brevet précitée, afin de permettre de déterminer si on est en présence d'un mouvement relatif entre la matrice de pixels et un objet se déplaçant dans la scène observée et, le cas échéant, de fournir une mesure de la vitesse de ce mouvement.

L'invention a donc pour objet un procédé tel que défini dans la revendication 1.

D'autres particularités avantageuses de l'invention, sont définies dans les sous-revendications.

D'autres caractéristiques et avantages de la présente invention apparaîtront au cours de la description qui va suivre, donnée uniquement à titre d'exemple et faite en se référant aux dessins annexés sur lesquels:
- les figures 1, 2 et 3 sont des diagrammes illustrant le principe qui est à la base de l'invention;
- la figure 4 illustre comment le procédé selon l'invention permet de mesurer la vitesse relative entre un objet et la matrice de pixels;
- la figure 5 montre un schéma de base d'une matrice de pixels pour la mise en oeuvre du procédé selon l'invention;
- la figure 6 est un schéma-bloc d'un pixel de la matrice de la figure 5;
- la figure 7 représente un schéma plus détaillé d'une première partie du pixel;
- la figure 8 montre une autre partie du pixel;
- les figures 9a, 9b et 9c sont des diagrammes illustrant la mise en oeuvre du procédé selon l'invention; et
- la figure 10 est un chronogramme destiné également à illustrer la mise en oeuvre du procédé selon l'invention.

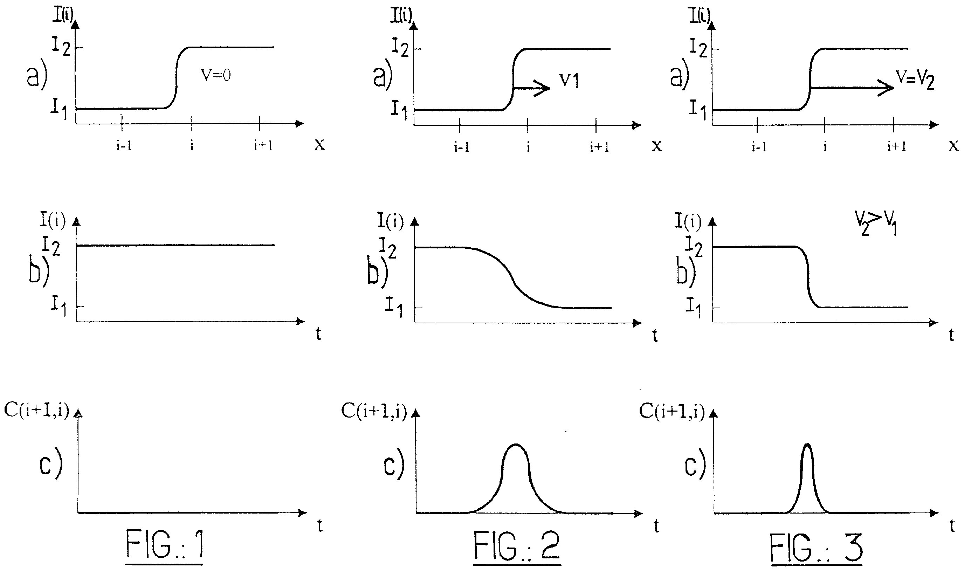

On va tout d'abord examiner les figures 1 à 3 qui présentent le principe qui est à la base du procédé de l'invention.

Pour le besoin de cet examen, on suppose qu'une matrice formant une rétine artificielle est disposée devant une scène et que cette matrice et cette scène exécutent un mouvement relatif l'une par rapport à l'autre. On peut donc imaginer par exemple que la matrice observe une scène dans laquelle se déplace un objet devant un arrière-plan par rapport auquel cet objet présente un contraste lumineux, ou encore qu'elle se déplace elle-même devant une image dans laquelle on trouve des zones présentant un contraste lumineux avec d'autres zones. Dans les deux cas, on souhaite pouvoir constater ce mouvement et/ou déterminer la vitesse de ce mouvement, la matrice de pixels pouvant être considérée comme une première entité et l'objet ou la scène comme une seconde entité.

Il est à noter que l'invention est décrite ci-après dans le cadre d'un exemple dans lequel le rayonnement émanant de la scène observée est lumineux. Toutefois, l'invention pourrait également s'appliquer aux cas où le rayonnement serait d'une autre nature, pourvu, bien entendu, que la matrice de pixels y soit sensible.

Ceci étant, pour la clarté de l'exposé, la figure 1 illustre le cas où ces deux entités sont encore immobiles l'une par rapport à l'autre.

On suppose également que dans la scène observée par la matrice, le profil d'intensité lumineuse dû au contraste marque une brusque variation le long d'une ligne ou d'une courbe que pour la commodité on appellera "bord de contraste".

Sur la figure 1a), on a représenté les intensités lumineuses I₁ et I₂ perçues par trois pixels adjacents i-1, i et i+1 de la matrice, situés par exemple dans une rangée de pixels dans la matrice selon une direction i. On voit que les pixels i-1 et i+1 reçoivent respectivement les intensités lumineuses I1 et 12, tandis que le pixel i perçoit également l'intensité 12, la transition entre les deux intensités (le bord) n'étant ici perçue par aucun des pixels considérés.

Si, comme c'est le cas de la figure 1a), la vitesse relative entre les deux entités est nulle (V=0), l'intensité perçue par le pixel i est constante en fonction du temps t et présente la valeur I2 (figure 1b)). Le contraste C entre les pixels i et i+1 demeure égal à zéro en fonction du temps t (figure 1c)).

Sur la figure 2, la vitesse relative V présente une valeur donnée V₁. Le bord de contraste se propage donc vis-à-vis de la matrice, comme cela ressort de la figure 2a). Lorsque le bord passe devant le pixel i (figure 2b)), l'intensité lumineuse passe de la valeur I2 à la valeur I1. Le contraste C entre les pixels i et i+1 (et d'une manière générale entre deux pixels voisins percevant le mouvement du bord de contraste) va augmenter à partir de zéro jusqu'à un maximum, puis redescendre de nouveau à zéro (figure 2c)).

Sur la figure 3, on suppose que la vitesse relative V=V₂, la valeur V₂ étant choisie supérieure à la vitesse V₁ (figure 3a)). Dans ces conditions, le bord passe plus rapidement devant le pixel i qui perçoit de ce fait une transition plus raide de l'intensité lumineuse (figure 3b)). Le contraste C présente alors une courbe de variation de forme analogue à celle du cas de la figure 2, mais de largeur plus faible (figure 3c)). Inversement, si la vitesse relative avait été moindre, la courbe d'évolution du contraste aurait été plus étalée par rapport à la forme de la figure 2c.

On constate donc qu'il y a une relation donnée entre l'évolution du contraste C et la vitesse de propagation du bord de contraste ou en d'autres termes, il est possible de déduire de l'évolution par rapport au temps du contraste C une information sur le mouvement relatif, et éventuellement sur la vitesse de ce mouvement, entre la scène observée par la matrice de pixels et cette matrice elle-même.

Ces observations étant faites, il a été constaté que la fonction représentative de cette variation de contraste d'un contour (bord) en mouvement, ressemble à une onde se propageant, et dont le temps de passage de sa valeur de crête à une fraction de cette dernière est, en première approximation, inversement proportionnel à la vitesse du contour dans la direction du gradient spatial correspondant à ce contour.

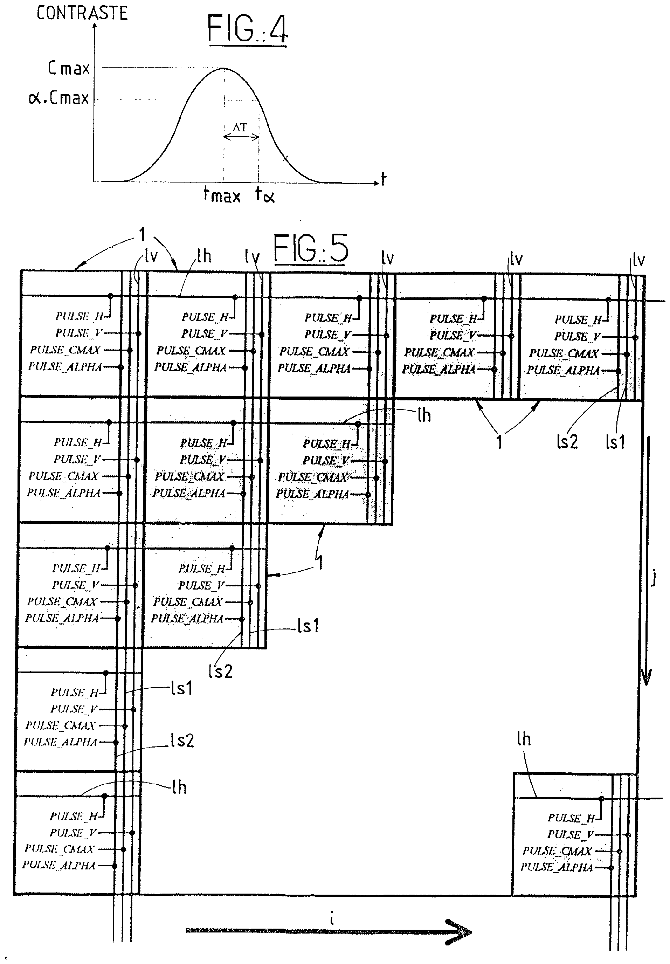

Ainsi, selon l'invention (figure 4), pour détecter un mouvement entre les deux entités, il importe de connaître si dans un pixel sur lequel passe le bord de contraste, la courbe de contraste passe par un maximum (Cₘₐₓ). Si en outre, on souhaite déterminer la vitesse de ce mouvement, on procède à une mesure du temps ΔT qui s'écoule entre l'instant tₘₐₓ où la courbe de contraste est à son maximum Cₘₐₓ et l'instant t_{α} où la fonction atteint une fraction α de ce maximum (α.Cₘₐₓ), avec 0<α<1. En d'autres termes, il s'agit de mesurer l'intervalle de temps ΔT= t_{α}-tₘₐₓ, s'écoulant entre l'instant où le contraste atteint la valeur Cₘₐₓ et où il atteint la valeur α.Cₘₐₓ.

La figure 5 représente un schéma très simplifié d'une matrice 1 de pixels destinée à mettre en oeuvre les concepts qui viennent d'être décrits. Le schéma ne montre que quelques pixels pour ne pas charger le dessin. Cependant, les spécialistes comprendront que la matrice peut en comporter un nombre quelconque, par exemple 64x64 ou davantage.

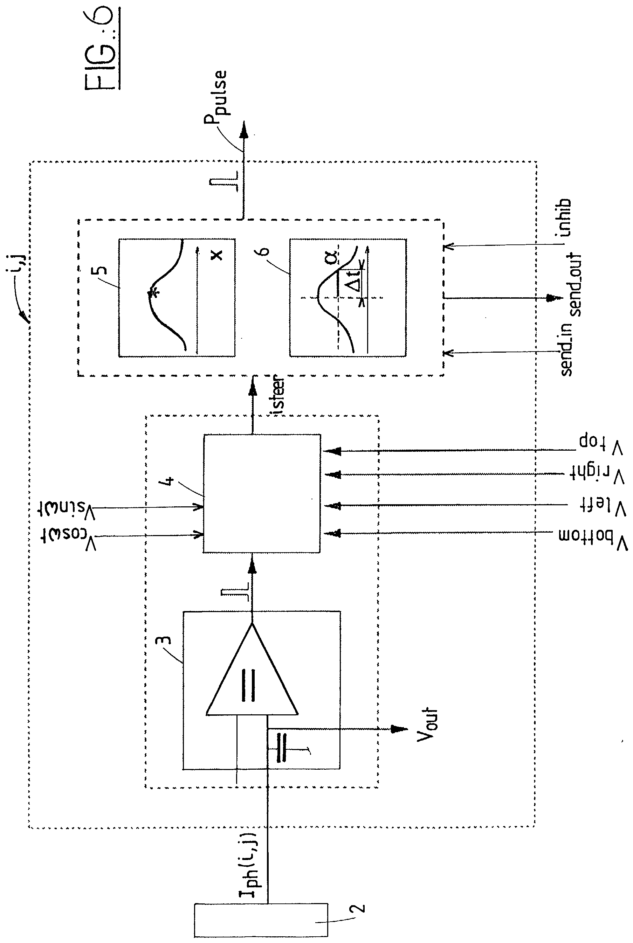

Les pixels sont agencés en rangées selon l'axe i (appelé aussi horizontal) et en colonnes selon l'axe j (appelé aussi vertical). Chaque pixel est connecté à des lignes d'adressage horizontales et verticales, Ih et Iv, respectivement, et leurs signaux de sortie PULSE_CMAX et PULSE_ALPHA apparaissent respectivement sur des lignes de sortie verticales Is1 et Is2 présentes dans chaque colonne de la matrice 1. Tous les pixels de celle-ci ont une structure identique qui va être décrite ci-après à l'aide des figures 6 à 10.

La figure 6 est un schéma-bloc de chacun des pixels, par exemple du pixel de coordonnées i,j de la matrice 1 représentée sur la figure 5. Il comprend un bloc 2 d'acquisition d'un signal de luminance Iₚₕ(i,j), un bloc d'intégration 3, un filtre tournant 4, un bloc 5 de commande de détection de maximum et un bloc 6 de détermination de la vitesse c'est à dire de la valeur ΔT. Les signaux utiles représentatifs des paramètres utiles (valeur du contraste, orientation du contraste et vitesse de mouvement) apparaissent sélectivement et décalés dans le temps sous la forme d'un signal pₚᵤₗₛₑ à la sortie des blocs 5 et 6.

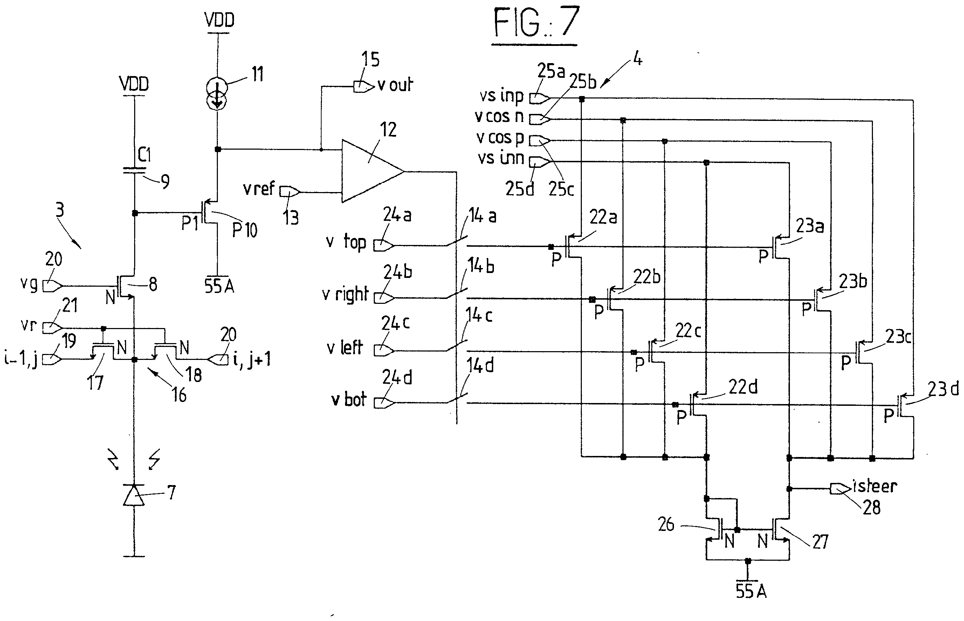

La figure 7 représente les détails des blocs 2, 3 et 4 de la figure 6. Une photodiode 7 est connectée en série avec un transistor N 8 et une capacité 9 entre les tensions d'alimentation V_{DD} et V_{SS}. La capacité 9 forme partie de l'intégrateur 3. Elle est connectée à la grille d'un transistor P 10 qui est monté en série avec une source de courant 11 entre les tensions V_{DD} et V_{SS}. Le noeud entre le transistor P 10 et cette source de courant 11 forme l'une des entrées d'un comparateur 12 dont l'autre entrée reçoit une tension de référence v_{ref} à partir d'une borne 13. La sortie du comparateur 12 est connectée pour commander quatre interrupteurs 14a à 14d du bloc 4 formant un filtre tournant. Le noeud entre la source de courant 11 et le transistor P 10 forme également une sortie 15 du bloc intégrateur 3 et fournit une tension vₒᵤₜ qui est le résultat de l'intégration du signal de luminance.

Le noeud entre la photodiode 7 et le transistor N 8 est connecté à un réseau de diffusion 16 qui répartit le photocourant Iₚₕ(i,j) vers quatre pixels voisins. Ainsi, ce noeud est raccordé par un transistor N 17 au noeud analogue du pixel de coordonnées (i-1, j) et par un transistor N 18 au noeud analogue du pixel de coordonnées (i, j+1) par l'intermédiaire de bornes 19 et 20. Ce réseau de diffusion 16 assure un filtrage passe-bas des signaux de luminance par diffusion des courants de luminance dans plusieurs pixels voisins dans la matrice du pixel i,j considéré. Le degré de diffusion peut être réglé par des tensions v_{g} et vᵣ appliquées respectivement sur les grilles du transistor 8 et des transistors 17 et 18 à partir de bornes 20 et 21.

Le filtre tournant 4 comprend deux groupes de quatre transistors P 22a à 22d et 23a à 23d dont les grilles sont respectivement reliées aux interrupteurs 14a à 14d. Ceux-ci, lorsqu'ils sont fermés appliquent sur ces grilles respectivement des tensions Vₜₒₚ, V_{right,} v_{left} et V_{bot} à partir de bornes 24a à 24d qui sont respectivement connectées aux bornes 15 des pixels voisins du pixel considéré; autrement dit, ces bornes reçoivent les tensions vₒᵤₜ des pixels qui se trouvent en haut, à droite, à gauche et en bas du pixel i,j considéré.

Dans chaque groupe de transistors 22a à 22d et 23a à 23d, les trajets drain-source sont reliés respectivement à des bornes d'entrée 25a à 25d sur lesquelles sont appliqués des signaux sinusoïdaux vₛᵢₙₚ, V_{cosn}, v_{cosp} et vₛᵢₙₙ formés à partir de quatre signaux sinusoïdaux décalés de 90°.

Les trajets source-drain des transistors des groupes 22a à 22d et 23a à 23d sont connectés en commun respectivement à deux transistors de sortie 26 et 27, le noeud entre les transistors 22a à 22d et le transistor 26 constituant une borne de sortie 28 sur laquelle apparaît un courant iₛₜₑₑᵣ qui est sinusoïdal et dont l'amplitude et la phase encodent respectivement la norme et l'orientation du contraste. On trouvera une description détaillée d'un filtre tournant dans la demande de brevet précitée.

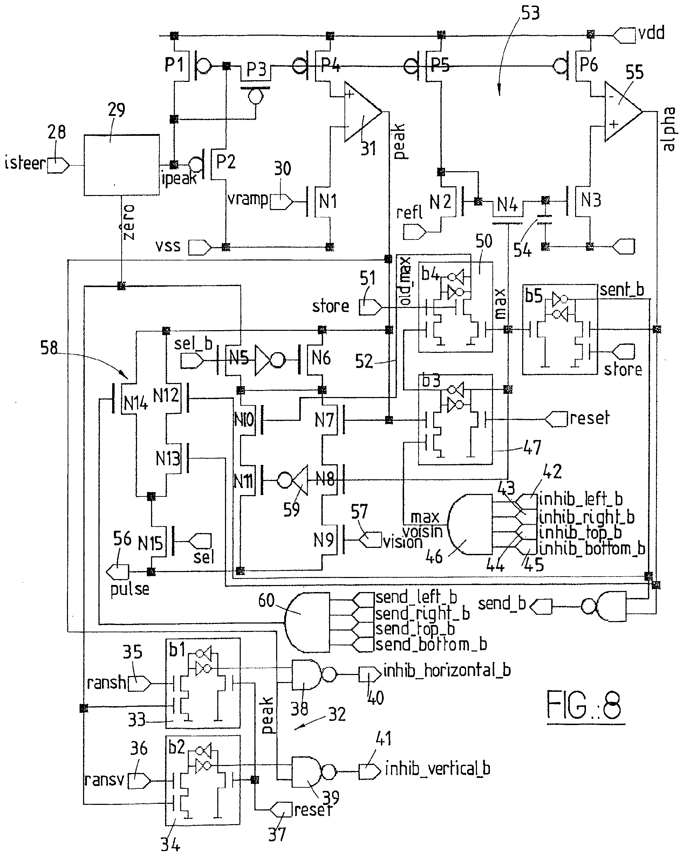

La figure 8 est un schéma plus détaillé des blocs 5 et 6 de la figure 6.

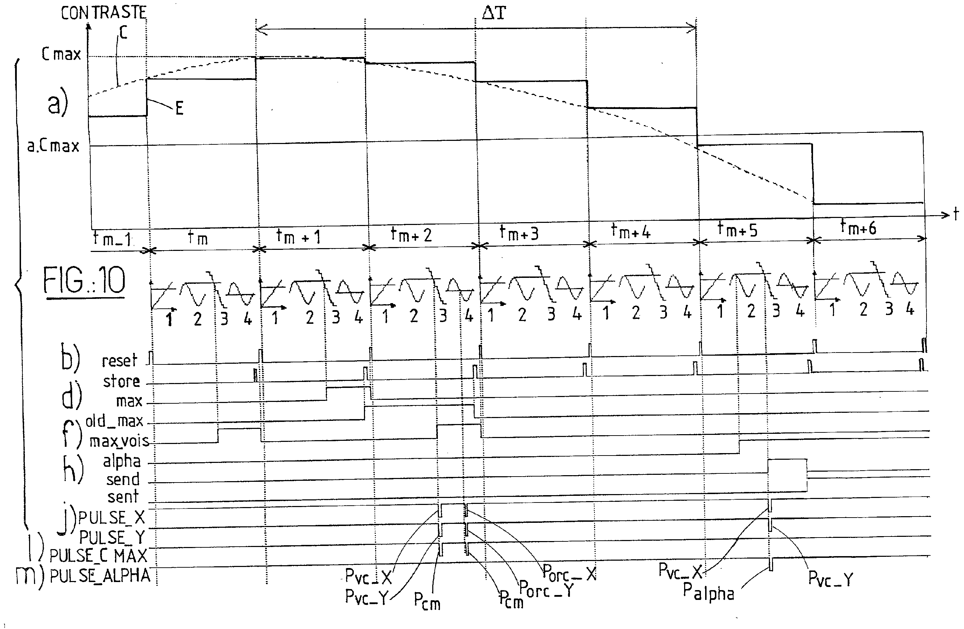

Avant d'examiner la figure 8, il est utile de noter que le procédé selon l'invention se déroule moyennant un cadencement par trames successives à l'aide d'une horloge (non représentée) qui délivre aux organes concernés des pixels de la matrice 1 les signaux d'horloge appropriés. A titre d'exemple et pour fixer les idées uniquement, la fréquence de ces trames peut se situer entre 30 et 200 Hz. De préférence, chaque trame est divisée en quatre intervalles de temps pendant lesquels les quatre phases suivantes de fonctionnement sont respectivement exécutées (voir également la figure 10):
Phase 1: acquisition par intégration du signal de luminance dans chaque pixel;
Phase 2: calcul de la valeur du contraste local dans chaque pixel et mémorisation du maximum de cette valeur,
Phase 3: confrontation de la valeur de contraste avec une tension en forme de rampe descendante et encodage de la norme de contraste,
Phase 4: calcul des orientations locales de contraste.

Il est à noter que pendant chacune des phases de chaque trame, certains circuits doivent être activés, tandis que d'autres sont désactivés. Cette activation et cette désactivation sont commandées par des signaux dérivés de l'horloge de système. Pour ne pas charger les dessins, les composants nécessaires à cet effet, ainsi que les interconnexions de ces composants avec les autres parties de la matrice n'ont pas été représentés.

Sur la figure 8, on voit que le signal iₛₜₑₑᵣ apparaissant sur la borne 28 de la figure 7 est appliqué à un bloc de traitement 29 dans lequel le signal iₛₜₑₑᵣ est redressé pour former un courant mono-alternance iₚₑₐₖ (ici formé par des alternances négatives) et dans lequel sont engendrées des impulsions p_{zéro} toutes les fois que le signal iₛₜₑₑᵣ passe par zéro dans un sens donné.

Ce courant iₚₑₐₖ est traité dans un circuit de mémorisation composé de quatre transistors P P1 à P4, montés de telle manière que la valeur minimale des alternances négatives du courant iₚₑₐₖ (c'est-à-dire en fait son maximum) soit verrouillée sur la grille du transistor P4 pendant la trame en cours. Cette valeur est recopiée sur deux autres transistors P P5 et P6.

Un signal en forme de rampe descendante vᵣₐₘₚ est appliqué à partir d'une borne 30 à la grille d'un transistor N N1 dont le trajet source-drain est relié à une première entrée d'un comparateur 31, l'autre entrée de ce comparateur étant connectée au trajet source-drain du transistor P4 de telle manière que le comparateur 31 délivre une impulsion pₚₑₐₖ lorsqu'il constate l'égalité entre le courant circulant dans le transistor P4 et celui traversant le transistor N1.

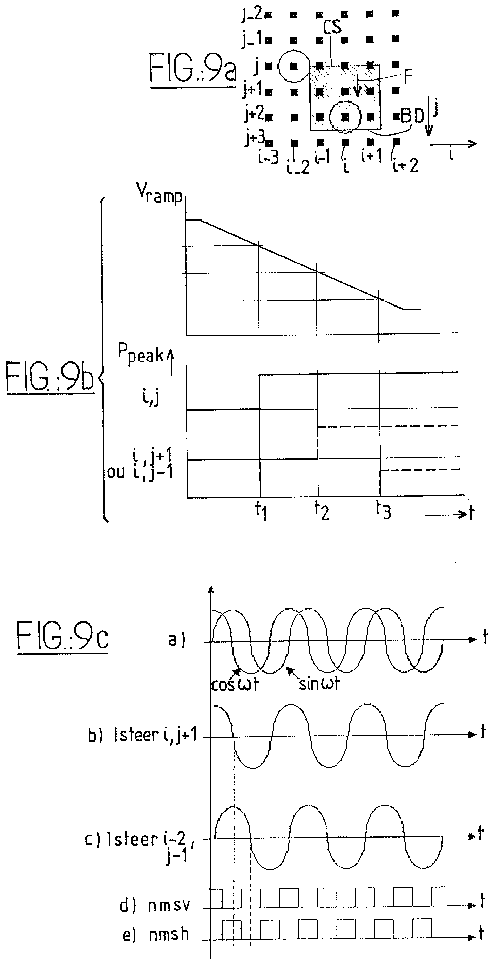

Sur la figure 9a), on a représenté un groupe de pixels de la matrice 1, à savoir un pixel i,j et quelques-uns de ses pixels voisins. Pour le besoin de la description, on suppose qu'à un instant considéré, la matrice 1 "voit" dans la scène observée un objet créant sur elle un carré sombre CS couvrant neuf pixels et formant des bords de contraste, le carré CS étant entouré d'une zone blanche. On suppose également que, du fait du mouvement relatif entre la scène observée et la matrice 1, le carré sombre CS se déplace d'un mouvement apparent selon la direction de la flèche F. Dans ces conditions, le bord de contraste BD (côté "inférieur" du carré CS) vient de passer le pixel i,j. L'instant considéré peut alors correspondre à la trame tₘ₊₂ représentée à la figure 10, comme cela apparaîtra dans la suite de la description, la figure 10 étant supposée par ailleurs refléter les événements se passant dans le pixel i,j.

Pour ce qui concerne la situation illustrée par la figure 9a), la figure 9b) montre la forme de la tension Vᵣₐₘₚ, ainsi que le signal pₚₑₐₖ à la sortie du comparateur 31 de la figure 9, dans le pixel i,j et ses pixels voisins i,j-1 et i,j+1 au cours de la trame tₘ₊1 (figure 10) pendant laquelle le contraste est maximum dans le pixel i,j.

On voit que le comparateur 31 du pixel i,j bascule en premier (au temps t₁) pendant la descente de la rampe. En revanche, les comparateurs 31 des pixels voisins selon l'axe j basculeront à des instants plus tardifs, par exemple t₂. Du fait de la forme du carré CS, dans l'exemple décrit, les pixels voisins du pixel i,j selon la direction i, réagiront de la même façon que ce pixel i,j.

Cependant, selon un aspect important de l'invention, l'information de contraste est retenue seulement si pendant une trame donnée, un maximum du courant iₛₜₑₑᵣ d'un pixel est détecté avant que les pixels voisins du pixel considéré i,j, situés dans la direction du contraste relevé par le pixel i,j, ne détectent le maximum de leur propre courant iₛₜₑₑᵣ. Dès que le maximum est détecté dans le pixel qui gagne la primauté sur ses voisins, ce pixel émet un signal d'inhibition vers ces voisins qui dès cet instant deviennent inopérants tout au long de la trame en cours. Ainsi par exemple, dans l'exemple de la figure 9a où le pixel i,j est supposé détecter son maximum en premier, l'information de contraste des pixels voisins i,j+1 et i, j-1, car ils sont situés dans la direction du contraste, ne sera pas retenue, tandis que celles des pixels i-1,j et i+1,j doivent être traitées.

Après avoir déterminé l'orientation de son contraste (ou plus concrètement du bord BD), chaque pixel peut produire des signaux d'inhibition appliqués à certains pixels voisins dont l'information doit être écartée.

Sur la figure 8, on voit que l'impulsion pₚₑₐₖ est envoyée à une section d'inhibition 32. Celle-ci reçoit également un signal impulsionnel p_{zero} provenant du bloc de traitement 29 et représentatif de l'orientation du contraste (phase du courant iₛₜₑₑᵣ). La section d'inhibition comporte deux verrous 33 et 34 auxquelles ce signal est appliqué pour être combiné logiquement, respectivement avec des signaux pₙₘₛₕ et pₙₘₛᵥ dont la période correspond à celle des signaux sinusoïdaux appliqués sur les entrées 25a à 25d du filtre tournant 4 et qui sont appliqués aux bornes 35 et 36. Les verrous 33 et 34 sont remis à l'état initial à la fin de chaque trame par un signal pᵣₑₛₑₜ appliqué sur une borne 37. Le signal pᵣₑₛₑₜ est dérivé de l'horloge du système. Les sorties des verrous 33 et 34 sont combinées logiquement avec les impulsions pₚₑₐₖ, respectivement dans des portes NAND 38 et 39, sur les sorties 40 et 41 desquelles apparaissent respectivement les signaux d'inhibition p_{inhib_horizontal_b} et p_{inhib_vertical_b}.

La figure 9c illustre comment la section d'inhibition 32 combine les passages par zéro du courant iₛₜₑₑᵣ avec les signaux pₙₘₛₕ et pₙₘₛᵥ afin de déterminer les signaux d'inhibition verticale et horizontale à appliquer à certains pixels voisins. Dans cette figure, la courbe a) représente les signaux sinusoïdal et cosinusoïdal appliqués au filtre 4 de la figure 7 (entrées 25a à 25d). La courbe b) de la figure 9c représente, pour ce qui concerne l'exemple de la figure 9a la forme du courant iₛₜₑₑᵣ du pixel i-2,j-1, la courbe c) représentant celle du courant iₛₜₑₑᵣ du pixel i,j+1.

Pour en revenir au pixel i,j de l'exemple décrit, celui-ci engendre pendant la trame considérée tₘ₊₁, le signal d'inhibition verticale p_{inhib_vertica_b} qu'il envoie à ses pixels, voisins verticalement, c'est à dire aux pixels i,j-1 et i,j+1 pour les empêcher de fonctionner pendant la trame en cours. On décrira par la suite la façon dont les pixels peuvent ainsi inhiber leurs voisins.

Pour pouvoir déterminer la valeur du contraste Cₘₐₓ et son orientation, il faut non seulement qu'un pixel considéré, par exemple, le pixel i,j, produise le signal pₚₑₐₖ en premier pendant la trame considérée, mais également que le contraste passe par un maximum. Selon un autre aspect important de l'invention, les valeurs de contraste et d'orientation de contraste ne sont validées pour un pixel donné que si, après la détection de la primauté de ce pixel par rapport à ses voisins sur le plan de la valeur de contraste, il est également établi, au cours de la trame suivante, s'il s'agit d'une diminution de la valeur de contraste.

Les courbes de la figure 10 permettent de comprendre cet aspect de l'invention. Le diagramme a) de cette figure représente par la courbe en pointillés C, l'évolution de la valeur de contraste du pixel i,j dans le cadre de l'exemple de la figure 9a. La courbe en escalier E de ce même diagramme symbolise la valeur mémorisée au cours de chaque trame du maximum détecté du courant iₚₑₐₖ produit à la sortie du bloc de traitement 29. Les autres courbes b) à m) de la figure 10 représentent les signaux apparaissant en divers points du circuit représenté sur la figure 8 à laquelle on se référera à nouveau.

Les signaux d'inhibition pouvant éventuellement être appliqués au pixel considéré y entrent par les bornes 42 à 45 sur lesquelles sont appliqués respectivement les signaux p_{inhib_left_b}, p_{inhib_right_b}, p_{inhib_top_b} et p_{inhib_bottom_b} provenant des pixels gauche, droit, en haut et en bas par rapport au pixel considéré. Ces signaux sont appliqués à une porte OU 46 dont la sortie produit le signal p_{max_voisin} qui sera donc actif si aucun des signaux d'entrée de cette porte 46 n'est actif (A noter que le suffixe "b" indique un signal complémenté). Les signaux d'entrée de la porte OU 46 proviennent respectivement des bornes 40 ou 41 des pixels voisins.

Le signal pₚₑₐₖ et le signal p_{max_voisin} (voir désormais les courbes b à m de la figure 10) sont appliqués à un verrou 47. Par conséquent, lorsque les deux signaux sont actifs pendant une trame, l'impulsion pₚₑₐₖ est mémorisée dans ce verrou jusqu'à la fin de la trame, c'est à dire tant que le signal pᵣₑₛₑₜ n'est pas appliqué sur la borne 48 du verrou 47. En d'autres termes, pendant une trame donnée, si un pixel donné n'est pas inhibé par l'un de ses voisins, c'est qu'il a la primauté par rapport à ceux-ci et que son signal pₚₑₐₖ se produit en premier pendant la trame en cours (figure 9b)). Dans ces conditions seulement l'impulsion pₚₑₐₖ est mémorisée en apparaissant sur un noeud 49 du verrou 47 sous la forme d'un signal pₘₐₓ.

Ainsi, dans l'exemple de la figure 10, pendant la trame tₘ, le signal p_{max_vois} interdit le passage du signal pₚₑₐₖ du pixel i,j considéré vers le nceud 49 à la sortie du verrou 47. Par contre dans la trame tₘ₊₁ suivante, le signal p_{max_voisin} est inactif. Par conséquent, le pixel i,j a la primauté de sorte que le signal pₘₐₓ passe le verrou 47 (courbe d) et f)) de ce pixel.

Ce signal pₘₐₓ est appliqué à un autre verrou 50 qui ne peut passer cette impulsion à sa sortie que si un signal pₛₜₒᵣₑ lui est appliqué par une borne 51. Le signal pₛₜₒᵣₑ produit une impulsion peu avant la fin de chaque trame et il est dérivé de l'horloge du système.

Par conséquent, lorsque les signaux pₘₐₓ et pₛₜₒᵣₑ sont actifs, le verrou 50 produit un signal sur la sortie appelé p_{old_max} représentant le fait que le pixel a atteint son maximum pendant la trame précédant la trame en cours. Dans l'exemple, ceci est le cas pendant la trame tₘ₊₂ pour ce qui concerne le pixel i,j dont la valeur de contraste était maximum pendant la trame tₘ₊₁.

Dans une section de comparaison 53, le signal pₘₐₓ est également appliqué à la grille d'un transistor N N4 dont le trajet source-drain est connecté entre les grilles de deux transistors N N2 et N3. Le transistor N2 est connecté en série avec le transistor P5 de sorte qu'il est traversé par un courant iₚₑₐₖ. Les transistors N2 et N3 forment un miroir de courant de sorte qu'il est possible d'ajuster le courant de sortie du transistor N3 à une fraction α de la valeur maximale du courant iₚₑₐₖ issu du bloc de traitement 29 et retenu par le transistor P4. Dans un exemple préféré, α est sensiblement égal à 0,5. Un condensateur 54 est destiné à se charger à une tension qui dépend du courant circulant dans les transistors P5 et N2, lorsque le transistor N4 est rendu conducteur par le signal pₘₐₓ. Le trajet source-drain du transistor P6 est relié à l'entrée inverseuse d'un comparateur 55 dont l'entrée non-inverseuse est reliée au trajet source-drain du transistor N3. Le comparateur 55 bascule dès que la valeur maximale du courant iₚₑₐₖ descend en-dessous de la valeur du courant circulant dans le transistor N3. Ce comparateur fournit alors un signal pₐₗₚₕₐ.

La valeur 0,5 du facteur α peut être déterminée par le dimensionnement des transistors N2 et N3 de la section de comparaison 53 sans qu'il y ait possibilité de réglage. Toutefois, selon la variante représentée aux figures, les sources des transistors N2 et N3 ne sont pas connectées à la tension d'alimentation V_{SS}, mais à des sources de tension de référence réglables, moyennant quoi le facteur α peut être choisi au gré des besoins.

La sortie du circuit de la figure 8 est constituée par la borne 56 sur laquelle peuvent apparaître sélectivement toutes les impulsions utiles pour connaître, pour ce qui concerne le pixel considéré (pixel i,j), la valeur et l'orientation locales du contraste à partir desquelles peut être déterminée la présence d'un mouvement relatif ainsi que la vitesse de propagation du bord de contraste (c'est à dire la vitesse de ce mouvement). Il est à noter que les impulsions sont présentées à la fois sur deux bords de la matrice 1 afin de pouvoir localiser par l'adresse qu'elles fournissent ainsi, de quel pixel proviennent les impulsions.

Par ailleurs, la matrice peut fonctionner au choix d'une part selon un mode dit "de vision" par lequel on détecte les informations statiques de contraste et un mode dit "de vitesse" par lequel la vitesse de déplacement relatif de la scène observée et de la matrice 1 peut être évaluée. La sélection des modes est réalisée au moyen d'un signal de commande pᵥᵢₛᵢₒₙ appliqué sur une borne 57, le mode de vision étant sélectionné lorsque le signal pᵥᵢₛᵢₒₙ est actif et le mode de vitesse l'étant dans le cas contraire. Un autre signal de commande pₛₑₗ dérivé de l'horloge du système est destiné à commander le passage vers la borne de sortie 56 des impulsions de contraste ou d'orientation.

Afin de pouvoir appliquer à la borne 56 les impulsions de sortie adéquates (pₚᵤₗₛₑ) aux instants appropriés, le circuit de la figure 8 comprend une section de sélection 58 à laquelle sont appliquées les impulsions pertinentes ainsi que les signaux de commande dont il vient d'être parlé.

Il est par ailleurs à noter que les signaux représentant la magnitude et l'orientation du contraste ne peuvent être extraits du pixel ayant inhibé ses voisins que s'il est effectivement passé par un maximum. Selon l'invention, lesdits signaux sont produits sur la borne 56, non pas durant la trame pendant laquelle se produit le maximum, mais pendant la trame suivante, c'est à dire pendant la trame pendant laquelle on constate que le contraste local diminue, phénomène qui se traduit par la perte de la primauté du pixel pour lequel le maximum est intervenu précédemment. C'est la raison pour laquelle le signal pₘₐₓ traduisant le passage par le maximum est mémorisé dans le verrou 50 pendant la trame courante pour donner naissance au signal p_{old_max} qui passe à l'état actif seulement pendant la trame suivante. Pour être certain que le maximum vient de passer, les signaux pₘₐₓ et p_{old_max} sont combinés logiquement l'autorisation de présentation des signaux sur la borne de sortie 56 n'étant donnée que si le signal pₘₐₓ est inactif et le signal p_{old_max} est actif. Cette combinaison logique est réalisée par les transistors N10 et N11 de la section de sélection 58 et par un inverseur 59.

La sélection des deux modes de vision et de vitesse est faite à l'aide de la branche de la section de sélection 58 composée des transistors N N6 à N9.

Ainsi, dans l'exemple de la figure 10, le pixel i,j passe par le maximum pendant la trame tₘ₊₁ et délivre ainsi les impulsions pertinentes pendant la trame suivante tₘ₊₂ et ce selon les directions i et j de la matrice 1. Ainsi, les courbes j), l) et m) de la figure 10 montrent que deux groupes de trois impulsions sont successivement délivrées pendant la trame tₘ₊₂, à savoir deux impulsions de valeur de contraste p_{vc-X} et _{Pvc-Y} et une impulsion de maximum p_{cm}, d'une part et deux impulsions d'orientation p_{or-X} et p_{or-Y} et une impulsion de maximum p_{cm}.

Lorsque le signal pₐₗₚₐ passe à l'état haut et que le signal sent_b est à l'état haut la borne send_b passe à l'état bas, ce qui a pour conséquence de forcer les pixels voisins à émettre leur valeur de contraste durant cette trame temporelle. Lorsque le signal send_b passe à l'état bas, la sortie de la porte 60 des pixels voisins passe à l'état haut. La sortie de la porte 60 est appliquée à un transistor N N14 d'une troisième branche de la section de sélection du circuit de la figure 8. Le transistor N14 peut court-circuiter deux autres transistors N N12 et N13 connectés en série avec un transistor N N15 auquel est appliqué le signal pₛₑₗ.

L'information de contraste des pixels voisins du pixel i,j est émise lorsque le contraste dans le pixel i,j atteint la fraction α de son maximum afin d'améliorer la précision de l'estimation de vitesse comme cela est décrit ci-après.

Le temps qui s'écoule entre le passage par un maximum de contraste et une fraction α de ce maximum est approximativement inversement proportionnel à la vitesse du bord de contraste dans la direction du gradient spatial du contraste correspondant à ce bord. En réalité, ce temps dépend de la pente de la fonction de contraste entre les points Cₘₐₓ et αCₘₐₓ (voir figure 4). Lorsque cette pente augmente, le temps diminue et inversement. En multipliant la grandeur ΔT par la grandeur Cₘₐₓ et en divisant le produit par le gradient de contraste mesuré lors du passage de la courbe de contraste par la valeur αCₘₐₓ, la nouvelle grandeur ΔT' est beaucoup moins dépendante de la pente de la fonction de contraste et par suite, la vitesse déterminée sur cette base devient plus précise.

Pendant la descente de la courbe de contraste, le pixel i,j attend le moment de basculement du comparateur 55, pour que l'intervalle ΔT puisse être mesuré. Le basculement du comparateur 55 engendre le signal pₐₗₚₕₐ qui est porté par l'intermédiaire de la borne 56 sur les lignes Is2 de la matrice 1. En même temps, des signaux de valeur de contraste _{Pvc_X} et _{Pvc_Y} sont également émis, le signal pₚₑₐₖ étant appliqué à la troisième branche de la section de sélection 58.

L'intervalle ΔT peut être déduit du nombre de trames s'étant écoulées depuis l'apparition des impulsions pertinentes liées au maximum jusqu'à l'apparition des impulsions relatives au signal pₐₗₚₕₐ, majoré d'une trame.

Bien que la description qui précède fait référence à des trames de durée constante, il est entendu que celles-ci peuvent être rendues de durées variables selon l'application envisagée, par exemple pour adapter la dynamique du système.

## Revendications

1. Procédé pour détecter un mouvement relatif entre une scène dont émane un rayonnement et une matrice de pixels (1) observant cette scène et capable de détecter ce rayonnement, chaque pixel de ladite matrice (1) relevant des informations vectorielles de contraste représentatives de la scène observée, **caractérisé en ce qu'**il consiste
- à surveiller dans chaque pixel de ladite matrice (1) l'évolution desdites informations vectorielles de contraste,
- pendant un premier intervalle de temps (tₘ₊₁), à détecter parmi lesdits pixels, le pixel (i,j) dont la valeur de l'information vectorielle de magnitude est supérieure à la valeur de l'information vectorielle de magnitude des pixels voisins (i,j-1; i,j+1, i-1,j; i+1,j),
- pendant un second intervalle de temps (tₘ₊₂) consécutif au premier intervalle de temps, à détecter si l'information vectorielle de magnitude du pixel dont la valeur était maximale pendant le premier intervalle de temps a subi une diminution, et
- à engendrer des signaux de sortie (p_{vcx}, p_{vcy}) représentatif dudit mouvement relatif, lorsque ladite diminution est détectée.

2. Procédé suivant la revendication 1, **caractérisé en ce qu'**il consiste également
pendant ledit premier intervalle de temps (tₘ₊₁) à relever la valeur de l'information vectorielle d'angle (p_{orcx}, p_{orcy}) desdits pixels et
lorsque ladite valeur supérieure d'information vectorielle est détectée, à inhiber les pixels qui sont voisins du pixel dont ladite valeur supérieure est détectée et qui coïncident avec l'orientation vectorielle telle que représentée par ladite valeur d'angle, afin de détecter ledit mouvement relatif sous la forme d'un mouvement de bord de contraste (BD).

3. Procédé selon l'une quelconque des revendications 1 et 2, **caractérisé en ce que** lesdits pixels voisins sont les pixels situés dans ladite matrice, soit en haut et en bas, soit à droite et à gauche d'un pixel considéré (i,j) en fonction de l'orientation du contraste.

4. Procédé selon l'une quelconque des revendications 1 à 3 destiné à mesurer en outre la vitesse dudit mouvement relatif, **caractérisé en ce qu'**il consiste en outre
- à mémoriser ledit signal de sortie,
- ultérieurement auxdits premiers et deuxièmes intervalles de temps, à détecter dans le pixel dont la valeur de l'information vectorielle de magnitude était maximale pendant ledit premier intervalle, un instant auquel la valeur de ladite information de magnitude atteint une fraction prédéterminée de ladite valeur maximale, et
- à mesurer le temps écoulé entre ledit second intervalle de temps et ledit instant, ledit temps étant représentatif de la vitesse dudit mouvement relatif.

5. Procédé selon la revendication 4, **caractérisé en ce qu'**il consiste, dès la détection de ladite valeur maximale de l'information vectorielle de magnitude, à multiplier ladite valeur par un facteur prédéterminé pour obtenir une valeur partielle équivalent à ladite fraction,
- à mémoriser ladite valeur partielle,
- à comparer la valeur courante de ladite information vectorielle de magnitude à ladite valeur partielle, et
- à engendrer un signal caractéristique dudit instant ultérieur, lorsque ladite valeur courante devient égale à ladite valeur courante.

6. Procédé suivant la revendication 5, **caractérisé en ce que** ledit facteur prédéterminé est réglable.

7. Procédé suivant la revendication 5, **caractérisé en ce que** ledit facteur est sensiblement égal à la moitié de la valeur maximale de l'information vectorielle de magnitude.

8. Procédé suivant l'une quelconque des revendications 5 à 7, **caractérisé en ce qu'**il est exécuté sur la base de trames temporelles de durée constante ou variable, **en ce que** lesdits premier et second intervalles ont chacun la longueur d'une trame et **en ce que** ledit temps représentatif est exprimé en nombre de trames.

9. Procédé suivant l'une quelconque des revendications précédentes, **caractérisé en ce qu'**il consiste:
- à transformer l'information vectorielle relevée par chaque pixel en un signal sinusoïdal dont l'amplitude représente la magnitude du vecteur local de contraste et la phase l'angle de ce vecteur,
- à comparer l'amplitude maximale détectée à un signal en forme de rampe décroissante et à engendrer une impulsion, lorsque ce signal en forme de rampe est égal à l'amplitude maximale,
- à engendrer une seconde impulsion lorsque la fonction sinusoïdale passe par une valeur nulle après la génération de la première impulsion, ladite seconde impulsion représentant l'orientation du contraste,
- ladite fonction sinusoïdale étant le résultat de l'information relevée par un pixel donné combinée à celles relevées par les pixels voisins dans la matrice, modulées par une même fonction de modulation sinusoïdale par rapport au temps dont la phase constitue la pondération des pixels voisins dans la combinaison.

## Patentansprüche

1. Verfahren zur Feststellung einer relativen Bewegung zwischen einer Strahlung abgebenden Szene und einer Pixelmatrix (1), die diese Szene beobachtet und imstande ist, diese Strahlung festzustellen, wobei jedes Pixel der Matrix (1) Kontrast-Vektorinformationen ermittelt, die für die beobachtete Szene repräsentativ sind, **dadurch gekennzeichnet, dass** es darin besteht,
- in jedem Pixel der Matrix (1) die Entwicklung der Kontrast-Vektorinformationen zu überwachen,
- in einem ersten Zeitintervall (tₘ₊₁) unter den Pixeln das Pixel (i, j) zu ermitteln, dessen Wert der Magnituden-Vektorinformation größer ist als der Wert der Magnituden-Vektorinformation der benachbarten Pixel (i, j-1; i, j+1, i-1, j; i+1, j),
- in einem zweiten Zeitintervall (tₘ₊₂), das dem ersten Zeitintervall folgt, zu ermitteln, ob die Magnituden-Vektorinformation des Pixels, dessen Wert im ersten Zeitintervall maximal war, verringert wurde, und
- Ausgangssignale (p_{vcx}, p_{vcy}) zu erzeugen, die für die relative Bewegung relativ sind, wenn die Verringerung festgestellt wurde.

2. Verfahren nach Anspruch 1, **dadurch gekennzeichnet, dass** es ebenfalls darin besteht
im ersten Zeitintervall (tₘ₊₁) den Wert der Winkel-Vektorinformation (p_{orcx,} p_{orcy}) der Pixel zu ermitteln, und
wenn der höhere Vektorinformationswert ermittelt ist, die Pixel zu hemmen, die in der Nähe des Pixels sind, dessen höherer Wert ermittelt wurde und die mit der Vektorausrichtung übereinstimmen, so wie von dem Winkelwert repräsentiert, um die relative Bewegung in Form einer Kontrastrandbewegung (BD) zu ermitteln.

3. Verfahren nach einem der Ansprüche 1 und 2, **dadurch gekennzeichnet, dass** die benachbarten Pixel Pixel sind, die sich in Abhängigkeit von der Ausrichtung des Kontrasts in der Matrix entweder oberhalb und unterhalb oder rechts und links eines betrachteten Pixels (i, j) befinden.

4. Verfahren nach einem der Ansprüche 1 bis 3, das ferner dazu bestimmt ist, die Geschwindigkeit der relativen Bewegung zu messen, **dadurch gekennzeichnet, dass** es ferner darin besteht
- das Ausgangssignal zu speichern,
- nach den ersten und zweiten Zeitintervallen in dem Pixel, dessen Wert der Magnituden-Vektorinformation im ersten Intervall maximal war, einen Moment zu ermitteln, zu dem der Wert der Magnitudeninformation einen vorbestimmten Bruchteil des maximalen Werts erreicht, und
- die zwischen dem zweiten Zeitintervall und dem Moment vergangene Zeit zu messen, wobei die Zeit für die Geschwindigkeit der relativen Bewegung repräsentativ ist.

5. Verfahren nach Anspruch 4, **dadurch gekennzeichnet, dass** es darin besteht, ab der Ermittlung des maximalen Werts der Magnituden-Vektorinformation den Wert mit einem vorbestimmten Faktor zu multiplizieren, um einen Teilwert zu erhalten, der dem Bruchteil entspricht,
- den Teilwert zu speichern,
- den laufenden Wert der Magnituden-Vektorinformation mit dem Teilwert zu vergleichen und
- ein Signal zu erzeugen, das für den vorherigen Wert charakteristisch ist, wenn der laufende Wert gleich dem laufenden Wert wird.

6. Verfahren nach Anspruch 5, **dadurch gekennzeichnet, dass** der vorbestimmte Faktor einstellbar ist.

7. Verfahren nach Anspruch 5, **dadurch gekennzeichnet, dass** der Faktor etwa der Hälfte des maximalen Werts der Magnituden-Vektorinformation entspricht.

8. Verfahren nach einem der Ansprüche 5 bis 7, **dadurch gekennzeichnet, dass** es auf der Basis von Zeitrastern konstanter oder variabler Dauer durchgeführt wird, dass das erste und zweite Intervall jeweils die Länge eines Rasters haben und dass die repräsentative Zeit in Rasteranzahl ausgedrückt wird.

9. Verfahren nach einem der vorangehenden Ansprüche, **dadurch gekennzeichnet, dass** es darin besteht:
- die von jedem Pixel ermittelte Vektorinformation in ein sinusförmiges Signal zu verwandeln, dessen Amplitude die Magnitude des lokalen Kontrastvektors und die Winkelphase dieses Vektors repräsentiert,
- die festgestellte maximale Amplitude mit einem abnehmend rampenförmigen Signal zu vergleichen und einen Impuls zu erzeugen, wenn dieses rampenförmige Signal der maximalen Amplitude entspricht,
- einen zweiten Impuls zu erzeugen, wenn die sinusförmige Funktion durch einen Wert Null läuft, nach dem Erzeugen des ersten Impulses, wobei der zweite Impuls die Ausrichtung des Kontrasts repräsentiert,
- wobei die sinusförmige Funktion das Ergebnis der von einem bestimmten Pixel ermittelten Information ist, kombiniert mit denen, die von den benachbarten Pixeln in der Matrix ermittelt wurden, moduliert durch eine selbe sinusförmige Modulationsfunktion in Bezug zur Zeit, deren Phase die Wichtung der in der Kombination benachbarten Pixel darstellt.

## Claims

1. A method of detecting relative movement between a scene from which radiation emanates and a matrix of pixels (1) observing said scene and capable of detecting said radiation, each pixel of said matrix measuring contrast vector information representative of the observed scene, **characterized in that** it consists in:
- monitoring the evolution of said contrast vector information in each pixel of said matrix,
- during a first time interval (tₘ₊₁), detecting among said pixels the pixel (I, j) whose magnitude vector information value is greater than the magnitude vector information value of the adjacent pixels (i, j-1; i, j+1, i-1, j; i+1, j),
- during a second time interval (tₘ₊₂) consecutive to the first time interval, detecting if the magnitude vector information of the pixel whose value was at a maximum during the first time interval has decreased, and
- generating output signals (P_{vcx}, P_{vcy})representative of said relative movement if said decrease is detected.

2. The method according to claim 1, **characterized in that**:
- the value of the angle vector information (P_{orcx}, P_{orcy}) of said pixels is measured during said first time interval, and
- when said greater vector information value is detected, the pixels which are adjacent the pixel whose greater value has been detected and which coincide with the vector orientation as represented by said angle value are inhibited in order to detect said relative movement in the form of a contrast edge movement (BD).

3. The method according to claim 1 or 2, **characterized in that** said adjacent pixels are pixels in said matrix either on top of and below or to the left and to the right of the pixel (i,j) concerned as a function of the contrast orientation.

4. The method according to any of claim 1 to 3 that is further adapted to measure the speed of said relative movement, and **characterized in that** it further consists in:
- memorizing said output signal,
- after said first and second time intervals, detecting in the pixel whose magnitude vector information value was at a maximum during said first time interval a moment at which the value of said magnitude information reaches a predetermined traction of said maximum value, and
- measuring the time elapsed between said second time interval and said moment, said elapsed time being representative of the speed of said relative movement.

5. The method according to claim 4 **characterized in that** it consists, as soon as said maximum value of said magnitude vector information is detected, in :
- multiplying said value by a predetermined factor to obtain a partial value equivalent to said fraction,
- storing said partial value in memory,
- comparing the current value of said magnitude vector information to said partial value, and
- generating a signal characteristic of said later time if said current value becomes equal to said partial value.

6. The method according to claim 5, **characterized in that** said predetermined factor is variable

7. The method according to claim 5, **characterized in that** said factor is substantially equal to half the maximum value of said magnitude vector information.

8. The method according to any of claims 5 to 7, **characterized in that** when executed on the basis of time frames of constant or varying duration, said first and second intervals each have the length of a frame, and said representative time is expressed as a number of frames.

9. The method according to any of the preceding claim, **characterized in that** it consists in:
- converting vector information measured by each pixel into a sinusoidal signal whose amplitude represents the magnitude of the local contrast vector and whose phase represents the angle of said vector,
- comparing the detected maximum amplitude to a signal in the form of a decreasing ramp and generating a pulse when said ramp signal is equal to said maximum amplitude, and
- generating a second pulse when said sinusoidal function passes through a zero value after generation of the first pulse, said second pulse representing the contrast orientation,
- said sinusoidal function being the result of combining the information measured by a given pixel with that measured by the adjacent pixels in said matrix, modulated by the same sinusoidal modulation function with respect to time whose phase constitutes the weighting of said adjacent pixels in the combination.
